# EUROPÄISCHE PATENTSCHRIFT

(11) **EP 3 230 143 B1**
(45) Veröffentlichungstag und Bekanntmachung des Hinweises auf die Patenterteilung: **16.06.2021**
(21) Anmeldenummer: 15793742.6
(22) Anmeldetag: 04.11.2015
(51) Int. Cl.: B60W 50/14, B60W 50/16, B60W 30/18, B60W 50/08

(54) **VERFAHREN ZUR UNTERSTÜTZUNG EINES FAHRERS EINES EINSPURIGEN KRAFTFAHRZEUGS ZUM SICHEREN BEFAHREN EINER KURVE**
METHOD FOR ASSISTING A DRIVER OF A SINGLE-TRACK MOTOR VEHICLE IN ORDER TO DRIVE THROUGH A CURVE SAFELY
PROCÉDÉ D'ASSISTANCE AU CONDUCTEUR D'UN VÉHICULE AUTOMOBILE À DEUX ROUES POUR SÉCURISER LA CONDUITE DANS UN VIRAGE

(30) Priorität: 11.12.2014 DE 102014225625
(43) Veröffentlichungstag der Anmeldung: 18.10.2017
(73) Patentinhaber: Bayerische Motoren Werke Aktiengesellschaft, 80809 München (DE)
(72) Erfinder: SEIDL, Josef, 84130 Dingolfing (DE)
(86) Internationale Anmeldenummer: PCT/EP2015/075695
(87) Internationale Veröffentlichungsnummer: WO 2016/091485

(56) Entgegenhaltungen:
- DE-A1-102005 048 542
- DE-A1-102012 201 802
- DE-A1-102013 225 751

## Beschreibung

Es wird ein Verfahren zur Unterstützung eines Fahrers eines einspurigen Kraftfahrzeugs während einer Fahrt zum sicheren Befahren einer Kurve angegeben. Weiterhin werden ein Fahrerassistenzsystem zum Durchführen des Verfahrens sowie ein das Fahrerassistenzsystem aufweisendes einspuriges Kraftfahrzeug angegeben.

Die Druckschrift DE 10 2012 209 518 A1 beschreibt ein Fahrerassistenzsystem für ein Fahrzeug, welches eine proaktive Leistungsmodus-Beratungsfunktion aufweist, um einem Fahrer abhängig von den Beobachtungen der letzten Fahreraktionen, die durch gesammelte Daten bestimmt werden, einen Leistungsmodus zu empfehlen. Dabei können aus Fahrzeug- und Nicht-Fahrzeugquellen erfasste Daten Ressourcen bereitstellen, aus welchen die Eigenschaften und Präferenzen des Fahrers bestimmt werden können.

In der Druckschrift DE 10 2012 201 802 A1 ist ein Fahrerassistenzsystem für ein Zweirad beschrieben. Das Fahrerassistenzsystem ermittelt einen Grenzwert einer von dem Zweirad bei einer Kurvendurchfahrt maximal einzunehmenden Schräglage unter Berücksichtigung einer strukturellen Geometrie des Zweirads oder basierend auf einer Beobachtung eines fahrerspezifischen Fahrverhaltens. Aus einer mit Hilfe eines Geschwindigkeitssensors zu ermittelnden aktuellen Geschwindigkeit des Zweirads sowie aus mit Hilfe einer Datenquelle zu ermittelnden Informationen über einen Verlauf einer von dem Zweirad zu befahrenden vorausliegenden Kurve kann das Fahrerassistenzsystem abschätzen, welche Schräglage das Zweirad in der vorausliegenden Kurve einnehmen wird. Über eine Signaleinrichtung kann der Fahrer gewarnt werden, wenn die prognostizierte Schräglage grösser wird als eine physikalisch kritische Schräglage oder eine von dem Fahrer subjektiv als unangenehm empfundene Schräglage. Alternativ kann das Fahrerassistenzsystem aktiv über eine Steuereinrichtung in das Fahrverhalten des Zweirads eingreifen.

Allerdings eignen sich derartige Systeme nur unzureichend für einen Einsatz in einspurigen Kraftfahrzeugen zum Unterstützen eines Fahrers zum sicheren Befahren einer Kurve.

Es ist eine zu lösende Aufgabe zumindest einiger Ausführungsformen, ein Verfahren anzugeben, das einen Fahrer eines einspurigen Kraftfahrzeugs unterstützt, so dass während einer Fahrt zu befahrende Kurven sicher gemeistert werden können und eine Sturzgefahr verringert wird. Weitere Aufgaben sind es, ein Fahrerassistenzsystem zum Durchführen des Verfahrens sowie ein das Fahrerassistenzsystem aufweisendes einspuriges Kraftfahrzeug anzugeben.

Diese Aufgaben werden durch ein Verfahren und Gegenstände gemäß den unabhängigen Patentansprüchen gelöst. Vorteilhafte Ausführungsformen und Weiterbildungen der Gegenstände gehen weiterhin aus den abhängigen Patentansprüchen, der nachfolgenden Beschreibung und aus den Zeichnungen hervor.

Das hier beschriebene Verfahren eignet sich zur Unterstützung eines Fahrers eines einspurigen Kraftfahrzeugs während einer Fahrt zum sicheren Befahren einer Kurve. Bei dem Verfahren werden zumindest eine aktuelle Fahrzustandsgröße sowie zumindest eine fahrerspezifische Fahrdynamikgröße mit einer bevorstehenden Fahrsituation verglichen und bei einem Erreichen oder Überschreiten eines Gefahrenschwellwertes ein Warnsignal ausgegeben.

Als aktuelle Fahrzustandsgröße wird dabei insbesondere die aktuelle Geschwindigkeit des Kraftfahrzeugs mittels eines Geschwindigkeitssensors aufgenommen und an eine Rechner- und Speichereinheit übermittelt. Der Geschwindigkeitssensor kann beispielsweise ein Raddrehzahlsensor sein. Alternativ oder zusätzlich ist es möglich, dass als aktuelle Fahrzustandsgröße eine aktuelle Schräglage des einspurigen Kraftfahrzeugs an die Rechner- und Speichereinheit übermittelt wird.

Als fahrerspezifische Fahrdynamikgröße werden wenigstens bisher erreichte Schräglagen des einspurigen Kraftfahrzeugs von der Rechner- und Speichereinheit gespeichert. Unter "bisher erreichten" Schräglagen können beispielsweise alle seit Beginn der aktuellen Fahrt erreichte Schräglagen verstanden werden. Weiterhin ist es möglich, dass auch erreichte Schräglagen aus vergangenen Fahrten einbezogen werden. Die Schräglagen des einspurigen Kraftfahrzeugs werden vorzugsweise von einem oder mehreren Neigungssensoren detektiert und über Neigungssensorsignale an die Rechner- und Speichereinheit übermittelt, welche die Neigungssensorsignale speichert und auswertet.

Bei dem hier beschriebenen Verfahren zur Unterstützung des Fahrers des einspurigen Kraftfahrzeugs zum sicheren Befahren einer Kurve ist es im Vergleich zu bekannten Verfahren von besonderem Vorteil, dass in der Vergangenheit erreichte Schräglagen des Kraftfahrzeugs als fahrerspezifische Fahrdynamikgröße von der Rechner- und Speichereinheit gespeichert werden und diese Daten beim Vergleich von aktuellen Fahrzustandsgrößen und den fahrerspezifischen Fahrdynamikgrößen mit einer bevorstehenden Fahrsituation zur Bewertung eines Gefahrenpotentials einbezogen werden. Dadurch kann bei einspurigen Kraftfahrzeugen die Gefahr eines Sturzes minimiert werden.

Weiterhin werden als fahrerspezifische Fahrdynamikgröße bisher erreichte Bremsdrücke und/oder Bremsdruckgradienten von der Rechner- und Speichereinheit gespeichert. Unter Bremsdruck kann dabei der Druck in einem Hydrauliksystem eines Bremssystems beim Betätigen einer Bremse des Kraftfahrzeugs verstanden werden. Der Bremsdruckgradient stellt eine fahrercharakteristische Größe dar, die eine zeitliche Auflösung des Ziehens der Bremse durch den Fahrer abbildet. Die erreichten Bremsdrücke bzw. Bremsdruckgradienten werden vorzugsweise von einem Bremsdrucksensor detektiert und über Bremsdrucksignale an die Rechner- und Speichereinheit übermittelt, welche die Bremsdrucksignale speichert und auswertet.

Zur Bewertung der bevorstehenden Fahrsituation wird der Kurvenradius der bei der Fahrt als Nächstes zu befahrenden Kurve mittels einer Navigationseinheit ermittelt und an die Rechner- und Speichereinheit übertragen. Die Navigationseinheit kann beispielsweise eine Ortsermittlungseinheit, wie z.B. eine GPS-Einheit, und eine Kartendateneinheit, die z.B. Kartendaten wie Kurvenradien, etc. beinhaltet, umfassen. Die Rechner- und Speichereinheit verarbeitet die empfangenen Sensorsignale und Daten, d.h. solchen aus den aktuellen Fahrzustandsgrößen, den fahrerspezifischen Fahrdynamikgrößen und denen zur bevorstehenden Fahrsituation, und veranlasst bei Erreichen bzw. Überschreiten des Gefahrenschwellwertes die Ausgabe des Warnsignals, so dass der Fahrer des einspurigen Kraftfahrzeugs vor der Gefahrensituation gewarnt wird und angemessen reagieren kann.

Gemäß einer weiteren Ausführungsform werden weiterhin eine oder mehrere der folgenden fahrerspezifischen Fahrdynamikgrößen von der Rechner- und Speichereinheit gespeichert: bisher gefahrene Kurvenradien, bisher erreichte Kurvengeschwindigkeiten und/oder bisher erreichte Bremspunkte vor Kurven.

Weiterhin kann gemäß einer bevorzugten Ausführungsform zur Bewertung der bevorstehenden Fahrsituation eine aktuelle Verkehrsdichte der befahrenen Strecke abgefragt werden. Beispielsweise kann die aktuelle Verkehrsdichte über ein Navigationsportal online abgefragt werden, wobei die empfangenen Daten von der Rechner- und Speichereinheit ausgewertet und bei der Bewertung der bevorstehenden Fahrsituation berücksichtigt werden, z.B. derart, dass bei einem hohen Verkehrsaufkommen das Warnsignal früher ausgegeben wird.

Gemäß einer weiteren Ausführungsform werden die fahrerspezifischen Fahrdynamikgrößen seit Beginn der aktuellen Fahrt ermittelt und von der Rechner- und Speichereinheit gespeichert. Alternativ oder zusätzlich können die fahrerspezifischen Fahrdynamikgrößen auch über mehrere Fahrten hinweg von der Rechner- und Speichereinheit gespeichert werden. Besonders vorteilhaft ist es, wenn die gespeicherten fahrerspezifischen Fahrdynamikgrößen einem Fahrerprofil zugeordnet werden. Beispielsweise kann sich der Fahrer vor Beginn einer Fahrt über ein Identifikationseinheit anmelden, so dass zu speichernde fahrerspezifischen Fahrdynamikgrößen dem Fahrerprofil zugeordnet werden können.

Gemäß einer weiteren Ausführungsform kann durch den Fahrer des einspurigen Kraftfahrzeugs ausgewählt werden, ob die fahrerspezifische Fahrdynamikgrößen mit Beginn der aktuellen Fahrt erstmalig generiert werden oder ob auf ein dem Fahrer zugeordnetes Fahrerprofil, welches fahrerspezifische Fahrdynamikgrößen aus vergangenen Fahrten enthält, zugegriffen werden soll.

Die Ausgabe des Warnsignals kann beispielsweise in optischer und/oder akustischer Form erfolgt. Die optische Anzeige kann zum Beispiel über ein Lichtsignal im Sichtbereich des Fahrers erfolgen. Eine akustische Ausgabe des Warnsignals erfolgt vorzugsweise über einen Warnton, der beispielsweise über einen Lautsprecher im Fahrzeug oder im Helm des Fahrers ausgegeben werden kann.

Alternativ oder zusätzlich kann die Ausgabe des Warnsignals in haptischer Form erfolgen. Beispielsweise kann bei der Ausgabe des Warnsignals eine Vibration in einem oder mehreren Bereichen des Kraftfahrzeugs erfolgen: im Gasgriff, im Pedal, im Sitz, im Tank. Weiterhin kann gemäß einer Ausführungsform eine haptische Ausgabe des Warnsignals über ein oder mehrere Vibrationselemente im Helm des Fahrers erfolgen, die z.B. über eine Bluetooth-Anbindung mit der Rechner- und Speichereinheit verbunden sein könne.

Gemäß einer weiteren Ausführungsform erfolgt die Ausgabe des Warnsignals mehrstufig. Das bedeutet, dass die Intensität des Warnsignals über zwei oder mehr Stufen steigen kann, falls der Fahrer nicht angemessen auf das Warnsignal reagiert. Beispielsweise kann bei einer akustischen Warnung die Lautstärke des Warnsignals zunehmen, bei einer optischen Warnung die Farbe des Lichtsignals sich ändern oder eine Frequenz eines Blinkens steigen, und bei einer haptischen Warnung die Frequenz oder Intensität einer Vibration zunehmen.

Gemäß einer weiteren Ausführungsform erfolgt die Ausgabe des Warnsignals derart, dass eine zu verbleibende Reaktionszeit zum erfolgreichen Vermeiden einer aufkommenden Gefahrensituation zwischen 0,5 und 2,0 Sekunden beträgt. Besonders bevorzugt kann die minimal zu verbleibende Reaktionszeit zum erfolgreichen Vermeiden der aufkommenden Gefahrensituation vom Fahrer vor Fahrtantritt eingestellt werden. Somit kann zum Beispiel vermieden werden, dass ein auf sportliches Fahren eingestellter Fahren von einem zu früh ausgelösten Warnsignal gestört wird oder sichergestellt werden, dass ein unsicherer Fahrer früh genug gewarnt wird.

Weiterhin wird ein Fahrerassistenzsystem zum Durchführen des hier beschriebenen Verfahrens angegeben. Das Fahrerassistenzsystem kann dabei die vorher und im Folgenden beschriebene Rechner- und Speichereinheit umfassen oder auf diese zugreifen.

Darüber hinaus wird ein einspuriges Kraftfahrzeug angegeben, welches das hier beschriebene Fahrerassistenzsystem aufweist. Das einspurige Kraftfahrzeug kann beispielsweise als Motorrad oder als Motorroller ausgebildet sein.

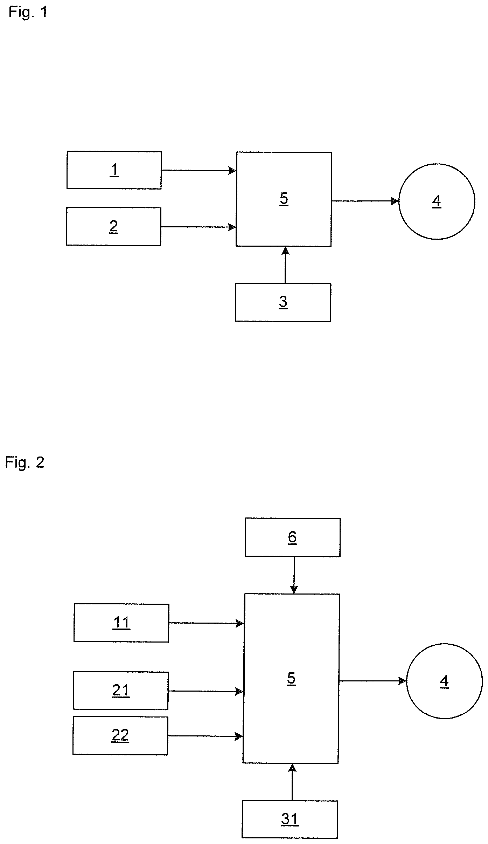

Weitere Vorteile und vorteilhafte Ausführungsformen des hier beschriebenen Verfahrens ergeben sich aus den im Folgenden in Verbindung mit den Figuren 1 und 2 beschriebenen Ausführungsformen. Es zeigen:
- Figur 1: eine schematische Darstellung eines hier beschriebenen Verfahrens zur Unterstützung eines Fahrers eines einspurigen Kraftfahrzeugs zum sicheren Befahren einer Kurve gemäß einem Ausführungsbeispiel, und
- Figur 2: eine schematische Darstellung eines hier beschriebenen Verfahrens gemäß einem weiteren Ausführungsbeispiel.

In den Ausführungsbeispielen und Figuren können gleiche oder gleich wirkende Bestandteile jeweils mit den gleichen Bezugszeichen versehen sein.

Figur 1 zeigt eine schematische Darstellung eines Verfahrens zur Unterstützung eines Fahrers eines einspurigen Kraftfahrzeugs während einer Fahrt zum sicheren Befahren einer Kurve gemäß einem Ausführungsbeispiel.

Bei dem Verfahren werden zumindest eine aktuelle Fahrzustandsgröße 1 sowie eine Mehrzahl von fahrerspezifische Fahrdynamikgrößen 2 mit einer bevorstehenden Fahrsituation 3 verglichen und bei einem Erreichen oder Überschreiten eines Gefahrenschwellwertes ein Warnsignal 4 ausgegeben. Die aktuelle Fahrzustandsgröße 1 wird beispielsweise als Sensorsignal von einem oder mehreren Sensoren des Kraftfahrzeugs erzeugt und an eine Rechner- und Speichereinheit 5 übermittelt. Die fahrerspezifischen Fahrdynamikgrößen 2 werden zum Beispiel als im Kraftfahrzeug erzeugte Daten und/oder als außerhalb des Kraftfahrzeugs erzeugte Daten an die Rechner- und Speichereinheit 5 übertragen. Die bevorstehende Fahrsituation 3 wird beispielsweise in Form von außerhalb des Kraftfahrzeugs erzeugter Daten, beispielsweise solcher die mittels einer Navigationseinheit des Fahrzeugs empfangen werden, an die Rechner- und Speichereinheit 5 übermittelt. Die Rechner- und Speichereinheit 5 verarbeitet die empfangenen Sensorsignale und Daten und veranlasst bei Erreichen bzw. Überschreiten eines Gefahrenschwellwertes die Ausgabe des Warnsignals 4.

In Figur 2 ist eine weitere Darstellung eines hier beschriebenen Verfahrens dargestellt. Als aktuelle Fahrzustandsgröße 1 wird dabei die aktuelle Geschwindigkeit des Kraftfahrzeugs mittels eines Geschwindigkeitssensors 11 aufgenommen und an eine Rechner- und Speichereinheit 5 übermittelt.

Als fahrerspezifische Fahrdynamikgrößen 2 werden sowohl die bisher erreichte Schräglagen des einspurigen Kraftfahrzeugs, die von einem Neigungssensor 21 detektiert und über Neigungssensorsignale an die Rechner- und Speichereinheit 5 übermittelt werden, als auch die bisher erreichten Bremsdrücke und Bremsdruckgradienten, die von einem Bremsdrucksensor 22 detektiert und über Bremsdrucksignale und an die Rechner- und Speichereinheit 5 übermittelt werden, von der Rechner- und Speichereinheit 5 gespeichert und ausgewertet.

Zur Bewertung der bevorstehenden Fahrsituation wird ein Kurvenradius der bei der Fahrt als Nächstes zu befahrenden Kurve mittels einer Navigationseinheit 31 ermittelt und die daraus resultierenden Navigationsdaten werden an die Rechner- und Speichereinheit 5 übertragen, welche die empfangenen Daten und Sensorsignale auswertet und mit einem berechneten Gefahrenschwellwert vergleicht. Bei Erreichen oder Überschreiten des Gefahrenschwellwertes wird das Warnsignal 4 in optischer, akustischer und/oder haptischer Form ausgegeben, um den Fahrer auf die Gefahrensituation aufmerksam zu machen und zu einer Reaktion zur Vermeidung der Gefahr zu veranlassen. Die Navigationseinheit 31 kann beispielsweise eine Ortsermittlungseinheit (z.B. GPS) und eine Kartendateneinheit (mit Kartendaten wie z.B. Kurvenradien) aufweisen.

Weiterhin kann als aktuelle Fahrzustandsgröße 1 beispielsweise die aktuelle Schräglage des einspurigen Kraftfahrzeugs, die von einem Neigungssensor detektiert wird, an die Rechner- und Speichereinheit 5 übermittelt werden.

Als weitere fahrerspezifische Fahrdynamikgrößen 2 können beispielsweise bisher gefahrene Kurvenradien, bisher erreichte Kurvengeschwindigkeiten und/oder bisher erreichte Bremspunkte vor Kurven von der Rechner- und Speichereinheit 5 gespeichert werden.

Darüber hinaus ist es möglich, dass sich der Fahrer des einspurigen Kraftfahrzeugs vor Beginn einer Fahrt über eine Identifikationseinheit 6 anmelden kann. Falls der Fahrer sich in der Vergangenheit bereits zumindest einmal angemeldet hat und daraufhin ein personalisiertes Fahrerprofil gespeichert worden ist, kann dieses Fahrerprofil beim erneuten Anmelden vor einer neuen Fahrt zugeordnet werden. Vorteilhafterweise können die fahrerspezifische Fahrdynamikgrößen 2 über mehrere Fahrten hinweg von der Rechner- und Speichereinheit 5 gespeichert und im Fahrerprofil abgelegt werden.

Besonders bevorzugt kann durch den Fahrer des einspurigen Kraftfahrzeugs vor Fahrbeginn ausgewählt werden kann, ob die fahrerspezifische Fahrdynamikgrößen 2 mit Beginn der aktuellen Fahrt erstmalig generiert werden oder ob auf das dem Fahrer zugeordnete Fahrerprofil, welches fahrerspezifische Fahrdynamikgrößen 2 aus vergangenen Fahrten enthält, zugegriffen werden soll.

Alternativ oder zusätzlich können die in den Figuren gezeigten Ausführungsbeispiele weitere Merkmale gemäß den Ausführungsformen der allgemeinen Beschreibung aufweisen.

### Bezugszeichenliste

- 1: aktuelle Fahrzustandsgröße
- 2: fahrerspezifische Fahrdynamikgrößen
- 3: bevorstehende Fahrsituation
- 4: Warnsignal
- 5: Rechner- und Speichereinheit
- 6: Identifikationseinheit
- 11: Geschwindigkeitssensor
- 21: Neigungssensor
- 22: Bremsdrucksensor
- 31: Navigationseinheit

## Patentansprüche

1. Verfahren zur Unterstützung eines Fahrers eines einspurigen Kraftfahrzeugs während einer Fahrt zum sicheren Befahren einer Kurve, bei dem zumindest eine aktuelle Fahrzustandsgröße (1) sowie fahrerspezifische Fahrdynamikgrößen (2) mit einer bevorstehenden Fahrsituation (3) verglichen werden und bei Erreichen oder Überschreiten eines Gefahrenschwellwertes ein Warnsignal (4) ausgegeben wird, wobei
- als aktuelle Fahrzustandsgröße (1) die aktuelle Geschwindigkeit des Kraftfahrzeugs mittels eines Geschwindigkeitssensors (11) aufgenommen und an eine Rechner- und Speichereinheit (5) übermittelt wird,
- als fahrerspezifische Fahrdynamikgrößen (2) sowohl bisher erreichte Schräglagen des einspurigen Kraftfahrzeugs als auch bisher erreichte Bremsdrücke und/oder Bremsdruckgradienten von der Rechner- und Speichereinheit (5) gespeichert werden, und
- für eine Bewertung der bevorstehenden Fahrsituation ein Kurvenradius einer als Nächstes zu befahrenden Kurve mittels einer Navigationseinheit (31) ermittelt und an die Rechner- und Speichereinheit (5) übermittelt wird.

2. Verfahren nach Anspruch 1, wobei
- die bisher erreichten Schräglagen von einem Neigungssensor (21) detektiert und über Neigungssensorsignale an die Rechner- und Speichereinheit (5) übermittelt werden, welche die Neigungssensorsignale speichert und auswertet, und
- die bisher erreichten Bremsdrücke und/oder Bremsdruckgradienten von einem Bremsdrucksensor (22) detektiert und über Bremsdrucksignale und an die Rechner- und Speichereinheit (5) übermittelt werden, welche die Bremsdrucksignale speichert und auswertet.

3. Verfahren nach einem der vorhergehenden Ansprüche, wobei weiterhin eine oder mehrere der folgenden fahrerspezifischen Fahrdynamikgrößen (2) von der Rechner- und Speichereinheit (5) gespeichert werden: bisher gefahrene Kurvenradien, bisher erreichte Kurvengeschwindigkeiten und/oder bisher erreichte Bremspunkte vor Kurven.

4. Verfahren nach einem der vorhergehenden Ansprüche, wobei als aktuelle Fahrzustandsgröße (1) weiterhin eine aktuelle Schräglage des einspurigen Kraftfahrzeugs an die Rechner- und Speichereinheit (5) übermittelt wird.

5. Verfahren nach einem der vorhergehenden Ansprüche, wobei zur Bewertung der bevorstehenden Fahrsituation weiterhin eine aktuelle Verkehrsdichte der befahrenen Strecke abgefragt wird.

6. Verfahren nach einem der vorhergehenden Ansprüche, wobei die fahrerspezifische Fahrdynamikgrößen (2) seit Beginn der aktuellen Fahrt ermittelt und von der Rechner- und Speichereinheit (5) gespeichert werden.

7. Verfahren nach einem der vorhergehenden Ansprüche, wobei die fahrerspezifische Fahrdynamikgrößen (2) über mehrere Fahrten hinweg von der Rechner- und Speichereinheit (5) gespeichert und einem Fahrerprofil zugeordnet werden können, wobei sich der Fahrer vor Beginn einer Fahrt über ein Identifikationseinheit (6) anmelden und einem gespeicherten Fahrerprofil zugeordnet werden kann.

8. Verfahren nach einem der vorhergehenden Ansprüche, wobei durch den Fahrer des einspurigen Kraftfahrzeugs ausgewählt werden kann, ob die fahrerspezifische Fahrdynamikgrößen (2) mit Beginn der aktuellen Fahrt erstmalig generiert werden oder ob auf ein dem Fahrer zugeordnetes Fahrerprofil, welches fahrerspezifische Fahrdynamikgrößen (2) aus vergangenen Fahrten enthält, zugegriffen werden soll.

9. Verfahren nach einem der vorhergehenden Ansprüche, wobei die Ausgabe des Warnsignals (4) mehrstufig erfolgt.

10. Verfahren nach einem der vorhergehenden Ansprüche, wobei die Ausgabe des Warnsignals (4) in optischer und/oder akustischer Form erfolgt.

11. Verfahren nach einem der vorhergehenden Ansprüche, wobei die Ausgabe des Warnsignals (4) in haptischer Form erfolgt.

12. Verfahren nach einem der vorhergehenden Ansprüche, wobei die Ausgabe des Warnsignals (4) derart erfolgt, dass eine zu verbleibende Reaktionszeit zum erfolgreichen Vermeiden einer aufkommenden Gefahrensituation zwischen 0,5 und 2,0 Sekunden beträgt.

13. Verfahren nach Anspruch 12, wobei die minimal zu verbleibende Reaktionszeit zum erfolgreichen Vermeiden der aufkommenden Gefahrensituation vom Fahrer vor Fahrtantritt eingestellt werden kann.

14. Fahrerassistenzsystem zum Durchführen eines Verfahrens gemäß einem der Ansprüche 1 bis 13.

15. Einspuriges Kraftfahrzeug aufweisend ein Fahrerassistenzsystem gemäß Anspruch 14.

## Claims

1. Method for assisting a driver of a single-track motor vehicle during a journey in order to safely drive through a bend, in which method at least one current driving state variable (1) and driver-specific driving dynamics variables (2) are compared with an imminent driving situation (3), and when a danger threshold value is reached or exceeded a warning signal (4) is output, wherein
- the current speed of the motor vehicle is recorded as a current driving state variable (1) by means of a speed sensor (11) and is transmitted to a computing and memory unit (5),
- both previously adopted oblique positions of the single-track motor vehicle and previously adopted brake pressures and/or brake pressure gradients are stored as driver-specific driving dynamics variables (2) by the computing and memory unit (5), and
- in order to evaluate the imminent driving situation, a bend radius of a bend which is to be traveled on next is determined by means of a navigation unit (31) and transmitted to the computing and memory unit (5).

2. Method according to Claim 1, wherein
- the previously adopted oblique positions are detected by an inclination sensor (21) and transmitted via inclination sensor signals to the computing and memory unit (5) which stores and evaluates the inclination sensor signals, and
- the previously adopted brake pressures and/or brake pressure gradients are detected by a brake pressure sensor (22) and transmitted by means of brake pressure signals and to the computing and memory unit (5) which stores and evaluates the brake pressure signals.

3. Method according to one of the preceding claims, wherein, furthermore, one or more of the following driver-specific driving dynamics variables (2) are stored by the computing and memory unit (5): previously driven-through bend radii, previously reached cornering speeds and/or previously adopted braking points before bends.

4. Method according to one of the preceding claims, wherein, furthermore, a current oblique position of the single-track motor vehicle is transmitted to the computing and memory unit (5) as a current driving state variable (1).

5. Method according to one of the preceding claims, wherein, furthermore, in order to evaluate the imminent driving situation a current traffic density of the route being driven on is interrogated.

6. Method according to one of the preceding claims, wherein the driver-specific driving dynamics variables (2) are determined since the start of the current journey and are stored by the computing and memory unit (5).

7. Method according to one of the preceding claims, wherein the driver-specific driving dynamics variables (2) are stored by the computing and memory unit (5) over a plurality of journeys and can be assigned to a driver profile, wherein before the start of a journey the driver can sign on by means of an identification unit (6) and be assigned to a stored driver profile.

8. Method according to one of the preceding claims, wherein the driver of the single-track motor vehicle can select whether the driver-specific driving dynamics variables (2) are generated for the first time at the start of the current journey or whether a driver profile which is assigned to the driver and which contains driver-specific driving dynamics variables (2) from preceding journeys is to be accessed.

9. Method according to one of the preceding claims, wherein the warning signal (4) is output in multiple stages.

10. Method according to one of the preceding claims, wherein the warning signal (4) is output in an optical and/or acoustic form.

11. Method according to one of the preceding claims, wherein the warning signal (4) is output in a haptic form.

12. Method according to one of the preceding claims, wherein the warning signal (4) is output in such a way that a remaining reaction time for the successful avoidance of an upcoming dangerous situation is between 0.5 and 2.0 seconds.

13. Method according to Claim 12, wherein the minimum remaining reaction time for the successful avoidance of the upcoming dangerous situation can be set by the driver before the start of the journey.

14. Driver assistance system for carrying out a method according to one of Claims 1 to 13.

15. Single-track motor vehicle having a driver assistance system according to Claim 14.

## Revendications

1. Procédé d'assistance à un conducteur d'un véhicule automobile à voie unique pendant un déplacement permettant le passage sûr d'un virage, dans lequel au moins une grandeur d'état de conduite actuelle (1) ainsi que des grandeurs de dynamique de conduite (2), spécifiques au conducteur, sont comparées avec une situation de conduite imminente (3), et si une valeur seuil de danger est atteinte ou dépassée, un signal d'alarme (4) est émis, dans lequel
- comme grandeur d'état de conduite actuelle (1), la vitesse actuelle du véhicule automobile est enregistrée au moyen d'un capteur de vitesse (11) et transmise à une unité de calcul et de stockage (5),
- comme grandeurs de dynamique de conduite (2), spécifiques au conducteur, à la fois des positions inclinées atteintes précédemment par le véhicule automobile à voie unique et des pressions de freinage et/ou des gradients de pression de freinage atteints précédemment sont stockés par l'unité de calcul et de stockage (5), et
- pour une évaluation de la situation de conduite imminente, un rayon de virage d'un virage à négocier ensuite est établi au moyen d'une unité de navigation (31) et transmis à l'unité de calcul et de stockage (5).

2. Procédé selon la revendication 1, dans lequel
- les positions inclinées atteintes précédemment sont détectées par un capteur d'inclinaison (21) et transmises sous forme de signaux de capteur d'inclinaison à l'unité de calcul et de stockage (5) qui stocke et évalue les signaux de capteur d'inclinaison, et
- les pressions de freinage et/ou les gradients de pression de freinage atteints précédemment sont détectés par un capteur de pression de freinage (22) et transmis sous forme de signaux de pression de freinage à l'unité de calcul et de stockage (5) qui stocke et évalue les signaux de pression de freinage.

3. Procédé selon l'une quelconque des revendications précédentes, dans lequel en outre une ou plusieurs des grandeurs de dynamique de conduite (2) suivantes, spécifiques au conducteur, sont stockées par l'unité de calcul et de stockage (5) : des rayons de virage parcourus précédemment, des vitesses de virage atteintes précédemment et/ou des points de freinage avant virage atteints précédemment.

4. Procédé selon l'une quelconque des revendications précédentes, dans lequel, comme grandeur d'état de conduite actuelle (1), en outre une position inclinée actuelle du véhicule automobile à voie unique est transmise à l'unité de calcul et de stockage (5).

5. Procédé selon l'une quelconque des revendications précédentes, dans lequel en outre une densité de trafic actuelle du trajet parcouru est interrogée pour l'évaluation de la situation de conduite imminente.

6. Procédé selon l'une quelconque des revendications précédentes, dans lequel les grandeurs de dynamique de conduite (2), spécifiques au conducteur, depuis le début du déplacement actuel sont établies et stockées par l'unité de calcul et de stockage (5).

7. Procédé selon l'une quelconque des revendications précédentes, dans lequel les grandeurs de dynamique de conduite (2), spécifiques au conducteur, pour plusieurs déplacements peuvent être stockées par l'unité de calcul et de stockage (5) et attribuées à un profil de conducteur, le conducteur pouvant se connecter avant le début d'un déplacement par l'intermédiaire d'une unité d'identification (6) et être attribué à un profil de conducteur stocké.

8. Procédé selon l'une quelconque des revendications précédentes, dans lequel le conducteur du véhicule automobile à voie unique peut sélectionner si les grandeurs de dynamique de conduite (2), spécifiques au conducteur, sont générées pour la première fois au début du déplacement actuel ou s'il faut accéder à un profil de conducteur attribué au conducteur et contenant des grandeurs de dynamique de conduite (2), spécifiques au conducteur, provenant de déplacements passés.

9. Procédé selon l'une quelconque des revendications précédentes, dans lequel l'émission du signal d'alarme (4) est effectuée en plusieurs étapes.

10. Procédé selon l'une quelconque des revendications précédentes, dans lequel l'émission du signal d'alarme (4) est effectuée sous forme optique et/ou acoustique.

11. Procédé selon l'une quelconque des revendications précédentes, dans lequel l'émission du signal d'alarme (4) est effectuée sous forme haptique.

12. Procédé selon l'une quelconque des revendications précédentes, dans lequel l'émission du signal d'alarme (4) est effectuée de telle sorte qu'un temps de réaction restant permettant d'éviter avec succès une situation dangereuse imminente est compris entre 0,5 et 2,0 secondes.

13. Procédé selon la revendication 12, dans lequel le temps de réaction restant minimal permettant d'éviter avec succès la situation dangereuse imminente peut être réglé par le conducteur avant le début du déplacement.

14. Système d'assistance au conducteur permettant d'effectuer le procédé selon l'une quelconque des revendications 1 à 13.

15. Véhicule automobile à voie unique présentant un système d'assistance au conducteur selon la revendication 14.
